# EUROPÄISCHE PATENTANMELDUNG

(11) **EP 4 239 831 A1**
(43) Veröffentlichungstag der Anmeldung: **06.09.2023**
(21) Anmeldenummer: 22159559.8
(22) Anmeldetag: 01.03.2022
(51) Int. Cl.: H02J 7/00

(54) **VERFAHREN ZUM STEUERN EINER LADEVORRICHTUNG**

(71) Anmelder: Hilti Aktiengesellschaft, 9494 Schaan (LI)
(72) Erfinder: Beck, Wolfgang, 86987 Schwabsoien (DE)
(74) Vertreter: Hilti Aktiengesellschaft Corporate Intellectual Property

(57) **Zusammenfassung**

Verfahren zum Steuern eines Ladevorgangs für wenigstens einen Akkumulator durch eine Ladevorrichtung, wobei der Akkumulator eine erste Kommunikationseinrichtung und die Ladevorrichtung eine zweite Kommunikationseinrichtung enthält, wodurch der Akkumulator und die Ladevorrichtung wenigstens miteinander kommunizieren können.

Ladevorrichtung zur Durchführung des Verfahrens.

Akkumulator zur Durchführung des Verfahrens.

System enthaltend eine Ladevorrichtung und wenigstens einen mit der Ladevorrichtung verbindbaren Akkumulator zur Durchführung des Verfahrens.

## Beschreibung

Die vorliegende Erfindung betrifft ein Verfahren zum Steuern eines Ladevorgangs für wenigstens einen Akkumulator durch eine Ladevorrichtung, wobei der Akkumulator eine erste Kommunikationseinrichtung und die Ladevorrichtung eine zweite Kommunikationseinrichtung enthält, wodurch der Akkumulator und die Ladevorrichtung wenigstens miteinander kommunizieren können.

Des Weiteren betrifft die vorliegende Erfindung eine Ladevorrichtung zur Durchführung des Verfahrens.

Darüber hinaus betrifft die vorliegende Erfindung einen Akkumulator zur Durchführung des Verfahrens.

Ferner betrifft die vorliegende Erfindung ein System enthaltend eine Ladevorrichtung und wenigstens einen mit der Ladevorrichtung verbindbaren Akkumulator zur Durchführung des Verfahrens.

Akkumulatoren sind weitestgehend aus dem Stand der Technik bekannt und können unter anderem dazu dient, mit Werkzeugmaschinen so verbunden zu werden, dass die Werkzeugmaschine mit elektrischer Energie aus dem Akkumulator versorgt werden kann. Der Akkumulator enthält dazu im Wesentlichen eine Vielzahl an Energiespeicherzellen (auch Akku-Zellen genannt), die in einem festen Gehäuse positioniert sind. Mit Hilfe der Energiespeicherzellen kann elektrische Energie von dem Akkumulator gespeichert und für einen Verbraucher (z.B. eine Werkzeugmaschine) auch bereitgestellt werden.

An einer Seite des Gehäuses des Akkumulators ist dabei eine Schnittstelle vorgesehen, durch die der Akkumulator wiederlösbar entweder mit einer Werkzeugmaschine oder einer Ladevorrichtung verbunden werden kann. Um einen Akkumulator mit elektrischer Energie zu laden, wird der Akkumulator mit der Ladevorrichtung wiederlösbar verbunden. Gemäß dem Stand der Technik weisen die Ladevorrichtungen eine Schnittstelle an einer Oberseite des Gehäuses der Ladevorrichtung auf, durch welche der Akkumulator mechanisch sowie elektrisch mit der Ladevorrichtung verbunden ist.

Ladevorrichtungen und insbesondere solche, die zum Laden der Akkumulatoren für Werkzeugmaschinen verwendet werden, sind relativ aufwendig und komplex ausgestaltet. Die relativ aufwendige sowie komplexe Ausgestaltung dieser Ladevorrichtungen ist dadurch begründet, dass die Ladevorrichtungen unter anderem in rauen bzw. strapaziösen Umgebungen (z.B. auf Baustellen oder Werkstätten) eingesetzt werden und gleichzeitig hochentwickelte Akkumulator in teilweise komplizierten Ladevorgängen mit elektrischer Energie versorgen müssen. Diese Ladevorrichtungen müssen hierzu zum einen sehr solide bzw. widerstandsfähig und zum anderen mit empfindlicher Technik ausgestaltet sein.

Eine besondere technische Herausforderung stellt dabei die Ausgestaltung der Schnittstelle an der Ladevorrichtung dar. Dadurch, dass für gewöhnlich die Schnittstelle nach oben offen ist und somit auch die elektrischen Anschlüsse der Gefahr ausgesetzt sind, dass durch diese Wasser und/oder Staub in das Innere der Ladevorrichtung eindringen kann. Durch das eindringende Wasser kann es unter anderem zu Kurzschlüssen in der Ladevorrichtung kommen und damit die Ladevorrichtung dauerhaft beschädigen. Eindringender Staub und anderer Schmutz kann die Ladevorrichtung zusätzlich beschädigen.

Es ist damit Aufgabe der vorliegenden Erfindung das vorstehend beschriebene Problem zu lösen.

Die Aufgabe wird gelöst durch den Gegenstand des unabhängigen Patentanspruchs 1, 6, 7 und 8. Vorteilhafte Ausführungsformen des erfindungsgemäßen Gegenstands sind in den abhängigen Patentansprüchen enthalten.

Die Aufgabe wird insbesondere gelöst durch ein Verfahren zum Steuern eines Ladevorgangs für wenigstens einen Akkumulator durch eine Ladevorrichtung, wobei der Akkumulator eine erste Kommunikationseinrichtung und die Ladevorrichtung eine zweite Kommunikationseinrichtung enthält, wodurch der Akkumulator und die Ladevorrichtung wenigstens miteinander kommunizieren können.

Erfindungsgemäß sind die folgenden Verfahrensschritte vorgesehen
- Verbinden des wenigstens einen Akkumulators mit der Ladevorrichtung;
- Aussenden wenigstens eines Signals von der erste Kommunikationseinrichtung des Akkumulators an die zweite Kommunikationseinrichtung der Ladevorrichtung zur Übermittlung wenigstens eines Akku-Kennwertes;
- Aussenden wenigstens eines Signals von der zweite Kommunikationseinrichtung der Ladevorrichtung an die erste Kommunikationseinrichtung des Akkumulators zum Anzeigen der Ladefähigkeit / Kompatibilität für einen Ladevorgang;
- Aussenden wenigstens eines Signals von der erste Kommunikationseinrichtung des Akkumulators an die zweite Kommunikationseinrichtung der Ladevorrichtung zum Einstellen der Ladevorrichtung in einen Ladezustand;
- Einstellen des Akkumulators von einem Entladezustand in einen Ladezustand;
- Aussenden wenigstens eines Signals von der erste Kommunikationseinrichtung des Akkumulators an die zweite Kommunikationseinrichtung der Ladevorrichtung zum Einstellen wenigstens eines ersten Ladekennwertes an der Ladevorrichtung;
- Aussenden elektrischer Energie von der Ladevorrichtung an den Akkumulator entsprechend wenigstens eines von dem Akkumulator angeforderten Ladekennwertes; und
- Aussenden wenigstens eines Signals von der erste Kommunikationseinrichtung des Akkumulators an die zweite Kommunikationseinrichtung der Ladevorrichtung zum Einstellen wenigstens eines zweiten Ladekennwertes an der Ladevorrichtung, wenn eine vorbestimmte Zeitdauer und/oder ein vorbestimmter Zustand für den Akkumulator erreicht ist.

Gemäß einer alternativen Ausführungsform kann es möglich sein, dass es sich bei dem wenigstens einen Ladekennwert um einen Spannungswert oder Stromstärkewert handelt.

Entsprechend einer weiteren alternativen Ausführungsform kann es möglich sein, dass der Spannungswert 21 bis 60 V, insbesondere 48 V beträgt.

Gemäß einer alternativen Ausführungsform kann es möglich sein, dass der Stromstärkewert 1 bis 10 A, insbesondere 5 A beträgt.

Entsprechend einer weiteren alternativen Ausführungsform kann es möglich sein, dass die Ladeleistung der Ladevorrichtung 21 bis 600 W, insbesondere 240 W beträgt.

Des Weiteren wird die Aufgabe gelöst durch eine Ladevorrichtung zur Durchführung des Verfahrens.

Erfindungsgemäß enthält die Ladevorrichtung eine Kommunikationseinrichtung und eine Lader-Schnittstelleneinrichtung zum wahlweisen Verbinden der Ladevorrichtung mit wenigstens einem Akkumulator, wobei die Lader-Schnittstelleneinrichtung in Form eines USB-Steckers ausgestaltet ist.

Darüber hinaus wird die Aufgabe gelöst durch einen Akkumulator zur Durchführung des Verfahrens.

Erfindungsgemäß enthält der Akkumulator eine Kommunikationseinrichtung und eine Akku-Schnittstelleneinrichtung zum wahlweisen Verbinden des Akkumulators mit der Ladevorrichtung, wobei die Akku-Schnittstelleneinrichtung in Form einer USB-Buchse ausgestaltet ist.

Ferner wird die Aufgabe gelöst durch ein System enthaltend eine Ladevorrichtung und wenigstens einen mit der Ladevorrichtung verbindbaren Akkumulator zur Durchführung des Verfahrens.

Erfindungsgemäß ist vorgesehen, dass der Akkumulator eine erste Kommunikationseinrichtung sowie eine Akku-Schnittstelleneinrichtung und die Ladevorrichtung eine zweite Kommunikationseinrichtung sowie eine Lader-Schnittstelleneinrichtung enthält, sodass die Ladevorrichtung und der Akkumulator zum Laden des Akkumulators mit elektrischer Energie verbindbar sind, wobei die Lader-Schnittstelleneinrichtung einen USB-Stecker und die Akku-Schnittstelleneinrichtung einen USB-Buchse enthält.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine schematische Seitenansicht auf eine Ladevorrichtung gemäß einer ersten Ausführungsform und einen mit der Ladevorrichtung verbundenen Akkumulator gemäß einer ersten Ausführungsform; und
- Figur 2: eine schematische Seitenansicht auf die Ladevorrichtung gemäß einer zweiten Ausführungsform und den mit der Ladevorrichtung verbundenen Akkumulator gemäß einer zweiten Ausführungsform.

### Ausführungsbeispiele:

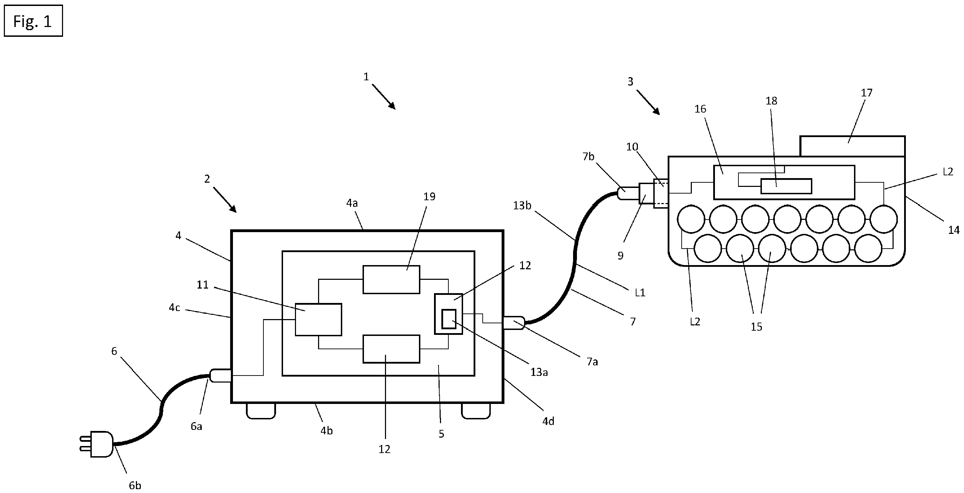

Figur 1 zeigt ein erfindungsgemäßes System 1 aus einer erfindungsgemäßen Ladevorrichtung 2 und einem erfindungsgemäßen Akkumulator 3 gemäß einer ersten Ausführungsform. Die Ladevorrichtung 2 dient dabei zum Laden bzw. Versorgen des mit der Ladevorrichtung 2 verbindbaren Akkumulators 3 mit elektrischer Energie.

Der Akkumulator 3 kann als wiederlösbare Energieversorgung für eine Werkzeugmaschine oder dergleichen dienen. Die Werkzeugmaschine ist in den Figuren nicht gezeigt.

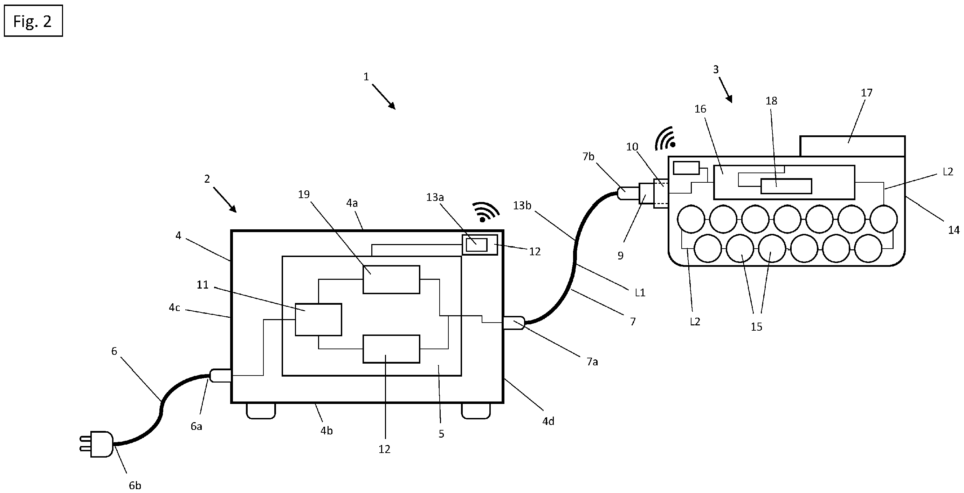

In den Figuren 1 und 2 ist beispielhaft lediglich ein einziger Akkumulator 3 mit der Ladevorrichtung 2 verbunden. Entsprechend einer alternativen und in den Figuren nicht gezeigte Ausführungsform kann es möglich, dass die Ladevorrichtung 2 zum Laden bzw. Versorgen von mehr als einem einzigen Akkumulator 3 mit elektrischer Energie ausgestaltet ist. Mit anderen Worten: die Ladevorrichtung 2 kann alternativ in der Lage sein, gleichzeitig mehrere Akkumulatoren 3 zu laden.

Die in Figur 1 gezeigte Ladevorrichtung 2 enthält im Wesentlichen ein Lader-Gehäuse 4, eine Steuerungseinrichtung 5, ein Anschlusskabel 6 und eine Lader-Schnittstelleneinrichtung 7.

Das Lader-Gehäuse 4 weist dabei eine Oberseite 4a, Unterseite 4b, eine erste Seitenwand 4c, zweite Seitenwand 4d, dritte Seitenwand und vierte Seitenwand auf. Die dritte und vierte Seitenwand ist in den Figuren nicht gezeigt.

Das Anschlusskabel 6 ist an der ersten Seitenwand 4c und die Lader-Schnittstelleneinrichtung 7 ist an der zweiten Seitenwand 4d befestigt.

Das Anschlusskabel 6 enthält ein erstes Ende 6a und ein zweites Ende 6b. Mit dem ersten Ende 6a ist das Anschlusskabel 6 an der ersten Seitenwand 4c des Lader-Gehäuses 4 befestigt. An dem zweiten Ende 6b des Anschlusskabels 6 ist ein Stecker 8 für eine Steckdosen positioniert, mit dem das Anschlusskabel 6 mit einer Steckdose verbunden werden kann.

Die Lader-Schnittstelleneinrichtung 7 ist in Form einer ersten Leitung L1 mit einem ersten und zweiten Ende 7a, 7b ausgestaltet. Das erste Ende 7a ist an der zweiten Seitenwand 4d des Lader-Gehäuses 4 befestigt. An dem zweiten Ende 7b der Lader-Schnittstelleneinrichtung 7 ist ein USB-Stecker (Universal Serial Bus) 9 positioniert. Der USB-Stecker 9 ist dazu ausgestaltet mit einer korrespondierend ausgebildeten USB-Buchse 10 wiederlösbar verbunden zu werden.

Wie nachfolgend in weiteren Details beschrieben dient die Verbindung des USB-Steckers 9 mit der USB-Buchse 10 neben der Übertragung elektrischer Energie auch zur Übertragung bzw. dem Austausch von Daten und Informationen in Form von elektrischen Signalen.

Die Steuerungseinrichtung 5 ist im Inneren des Lader-Gehäuses 4 positioniert und enthält unter anderem eine Strommesseinrichtung 11, Spannungsmesseinrichtung 12 und eine Kommunikationseinrichtung 13.

Die Steuerungseinrichtung 5 dient zum Steuern und Regeln der einzelnen Funktionen der Ladevorrichtung 2. Zu den verschiedenen Funktionen der Steuerungseinrichtung 5 gehört unter anderem das Einstellen eines bestimmten Spannungswertes oder Stromstärkewertes für eine elektrische Energie zum Laden eines mit der Ladevorrichtung 2 verbundenen Akkumulators 3.

Die Strommesseinrichtung 11 dient zum Messen bzw. Erfassen eines Stromstärkewertes.

Die Spannungsmesseinrichtung 12 dient wiederum zum Messen bzw. Erfassen eines elektrischen Spannungswertes.

Die Kommunikationseinrichtung 13 dient zum Senden und Empfangen von elektrischen Signalen. Mit Hilfe der Kommunikationseinrichtung 13 kann die Ladevorrichtung 2 in Kommunikation mit dem Akkumulator 3 treten. Hierzu werden elektrische Signale für den Austausch von Daten und Informationen zwischen der Ladevorrichtung 2 und dem Akkumulator 3 gesendet und empfangen.

Gemäß der ersten Ausführungsform der Ladevorrichtung 2 enthält die Kommunikationseinrichtung 13 ein Kommunikationselement 13a sowie ein Übertragungselement 13b. Das Übertragungselement 13b ist durch die erste Leitung L1 ausgestaltet. Somit können mit Hilfe der ersten Leitung L1 neben der elektrischen Energie auch elektrische Signale für den Austausch von Daten und Informationen zwischen der Ladevorrichtung 2 und dem Akkumulator 3 ausgetauscht werden.

Der Akkumulator 3 enthält im Wesentlichen ein Akku-Gehäuse 14, eine Vielzahl an Energiespeicherzellen 15, eine Steuereinrichtung 16, eine Akku-Schnittstelleneinrichtung 17 und eine Kommunikationseinrichtung 18.

Wie in Figur 1 angedeutet sind die Energiespeicherzellen 15 miteinander und mit der Steuereinrichtung 16 elektrisch über zweite Leitungen L2 verbunden. Durch die Verbindung kann elektrische Energie von bzw. zu den Energiespeicherzellen 15 geleitet werden.

Die Steuereinrichtung 16 dient zum Steuern und Regeln der einzelnen Funktionen des Akkumulators 3. Zu den Funktionen gehört unter anderem die Einstellung eines Spannungswertes sowie eines Stromstärkewertes für die geregelte Abgabe von elektrischer Energie aus den Energiespeicherzellen 15 an eine mit dem Akkumulator 3 verbundene Werkzeugmaschine. Die Werkzeugmaschine ist in den Figuren nicht dargestellt.

Die Akku-Schnittstelleneinrichtung 17 ist in Form einer USB-Buchse 10 zum wiederlösbaren Verbinden mit einem korrespondierend ausgestalteten USB-Stecker 9 ausgebildet.

Die Kommunikationseinrichtung 18 des Akkumulators 3 dient zum Senden und Empfangen von elektrischen Signalen. Mit Hilfe der Kommunikationseinrichtung 18 kann der Akkumulator 3 in Kommunikation mit der Ladevorrichtung 2 treten. Auch hierdurch werden elektrische Signale für den Austausch von Daten und Informationen zwischen der Ladevorrichtung 2 und dem Akkumulator 3 ausgetauscht.

Durch Durchführung des erfindungsgemäßen Verfahrens zum Steuern eines Ladevorgangs für den Akkumulator 3 durch die Ladevorrichtung 2 wird zunächst, wie in Figur 1 angedeutet, der Akkumulator 3 mit der Ladevorrichtung 2 wiederlösbar verbunden. Zum Verbinden des Akkumulators 3 mit der Ladevorrichtung 2 wird das freie Ende der Leitung L1 mit dem USB-Stecker 9 der Ladevorrichtung 2 mit der USB-Buchse 10 des Akkumulators 3 verbunden. Wie bereits vorstehend erwähnt können durch die Verbindung des USB-Steckers 9 der Ladevorrichtung 2 mit der USB-Buchse 10 des Akkumulators 3 elektrische Signale zwischen der Ladevorrichtung 2 und dem Akkumulator 3 ausgetauscht werden.

Nach dem Verbinden des Akkumulators 3 mit der Ladevorrichtung 2 wird zunächst ein Signal von der Kommunikationseinrichtung 18 des Akkumulators 3 an die Kommunikationseinrichtung 13 der Ladevorrichtung 2 zur Übermittlung von Akku-Kennwerten gesendet. Die Übermittlung der Akku-Kennwerte dient zur Identifizierung des Akkumulators 3 gegenüber der Ladevorrichtung 2. Durch die Identifizierung werden bestimmte Eigenschaften des Akkumulators 3 in Form der elektrischen Signale an die Ladevorrichtung 2 gesendet. Zu den Eigenschaften des Akkumulators 3 gehören beispielsweise ein maximal zulässiger Spannungswert, Stromstärkewert, Temperaturwert oder Leistungswert für ein Laden der Energiespeicherzellen 15 mit elektrischer Energie.

Nach Erhalt des entsprechenden Signal bezüglich der Akku-Kennwerte wird ein Signal von der Kommunikationseinrichtung 13 der Ladevorrichtung 2 an die Kommunikationseinrichtung 18 des Akkumulators 3 zum Anzeigen der Ladefähigkeit bzw. Kompatibilität der Ladevorrichtung 2 und dem angeschlossenen Akkumulator 3 für einen Ladevorgang ausgesendet.

Anschließend bzw. nach Erhalt dieses Signals wird ein weiteres Signal von der Kommunikationseinrichtung 18 des Akkumulators 3 an die Kommunikationseinrichtung 13 der Ladevorrichtung 2 zum Einstellen der Ladevorrichtung 2 in einen Ladezustand gesendet. Die Ladevorrichtung 2 ist generell derartig ausgestaltete, dass diese in einem Ladezustand, neutralen Zustand (auch als "Stand-by" bezeichnet) oder Entladezustand eingestellt sein kann.

In dem Ladezustand kann elektrische Energie von der Ladevorrichtung 2 an einen angeschlossen und für einen Ladevorgang geeigneten Akkumulator 3 gesendet werden. In dem Entladezustand kann elektrische Energie von einem Akkumulator 3 zum Speichern in einer entsprechenden Energiespeichereinrichtung 19 der Ladevorrichtung 2 aufgenommen werden. Bei der Energiespeichereinrichtung 19 der Ladevorrichtung 2 kann es sich um eine Akku-Zelle handeln.

In dem neutralen Zustand wird weder elektrische Energie aus einem angeschlossenen Akkumulator 3 in die Ladevorrichtung 2 aufgenommen noch von der Ladevorrichtung 2 an einen angeschlossenen Akkumulator 3 abgeben.

Anschließend wird der Akkumulator 3 durch seine Steuereinrichtung 16 von einem Entladezustand in einen Ladezustand eingestellt, sodass von der Ladevorrichtung 2 bereitgestellte elektrische Energie von dem Akkumulator 3 aufgenommen bzw. von den Energiespeicherzellen 15 des Akkumulators 3 gespeichert werden kann.

Nach Einstellen des Akkumulators 3 in den Ladezustand wird von der Kommunikationseinrichtung 18 des Akkumulators 3 ein weiteres Signal an die Kommunikationseinrichtung 13 der Ladevorrichtung 2 zum Einstellen wenigstens eines ersten Ladekennwertes an der Ladevorrichtung 2 gesendet. Bei dem Ladekennwert kann es sich um einen Spannungswert, Stromstärkewert oder eine Ladeleistungswert für den Ladevorgang handeln.

Der Spannungswert kann dabei für den Ladevorgang 21 bis 60 Volt (V) betragen. Gemäß der vorliegenden Ausführungsform beträgt der Spannungswert 48 V.

Der Stromstärkewert kann für den Ladevorgang 1 bis 10 Ampere (A) betragen. Gemäß der vorliegenden Ausführungsform beträgt der maximale Stromstärkewert 5 A.

Die Ladeleistung kann für den Ladevorgang 21 bis 600 Watt (W) betragen. Gemäß der vorliegenden Ausführungsform beträgt die Ladeleistung 240 W.

In einem nächsten Verfahrensschritt wird elektrische Energie von der Ladevorrichtung an den Akkumulator entsprechend wenigstens eines von dem Akkumulator angeforderten Ladekennwertes gesendet. In dem vorliegenden Ausführungsbeispiel entsprechen die Ladekennwerte für den angeschlossenen Akkumulator einer Ladespannung von 48 V, einer Ladestromstärke von 5 A und einer resultierenden Ladeleistung von 240 W.

Nach einer vorbestimmte Zeitdauer und/oder nach Erreichen eines vorbestimmten Zustands für den Akkumulator 3 wird ein weiteres Signal von der Kommunikationseinrichtung 18 des Akkumulators 3 an die Kommunikationseinrichtung 13 der Ladevorrichtung 2 zum Einstellen wenigstens eines neuen Ladekennwertes an der Ladevorrichtung 2 gesendet. Bei dem neuen Ladekennwert kann es sich um einen neuen Ladespannungswert, Ladestromstärkewert oder Ladeleistung handeln. Bei der vorbestimmten Zeitdauer kann es sich um mehrere Minuten, beispielsweise zwischen 5 und 30 Minuten handeln.

Wie in Figur 2 angedeutet, kann sowohl die Kommunikationseinrichtung 18 des Akkumulators 3 als auch die Kommunikationseinrichtung 13 der Ladevorrichtung 2 drahtlos und insbesondere durch eine Bluetooth-Technologie ausgestaltet sein.

### Bezugszeichen

- 1: System
- 2: Ladevorrichtung
- 3: Akkumulator
- 4: Lader-Gehäuse
- 4a: Oberseite des Lader-Gehäuses
- 4b: Unterseite des Lader-Gehäuses
- 4c: erste Seitenwand des Lader-Gehäuses
- 4d: zweite Seitenwand des Lader-Gehäuses
- 5: Steuerungseinrichtung der Ladevorrichtung
- 6: Anschlusskabel
- 6a: erstes Ende des Anschlusskabels
- 6b: zweites Ende des Anschlusskabels
- 7: Lader-Schnittstelleneinrichtung
- 7a: erstes Ende der Lader-Schnittstelleneinrichtung
- 7b: zweites Ende der Lader-Schnittstelleneinrichtung
- 8: Stecker
- 9: USB-Stecker
- 10: USB-Buchse
- 11: Strommesseinrichtung
- 12: Spannungsmesseinrichtung
- 13: Kommunikationseinrichtung
- 13a: Kommunikationselement
- 13b: Übertragungselement
- 14: Akku-Gehäuse
- 15: Energiespeicherzellen
- 16: Steuereinrichtung des Akkumulators
- 17: Akku-Schnittstelleneinrichtung
- 18: Kommunikationseinrichtung des Akkumulators
- 19: Energiespeichereinrichtung der Ladevorrichtung
- L1: erste Leitung
- L2: zweite Leitungen

## Patentansprüche

1. Verfahren zum Steuern eines Ladevorgangs für wenigstens einen Akkumulator (3) durch eine Ladevorrichtung (2), wobei der Akkumulator (3) eine erste Kommunikationseinrichtung (18) und die Ladevorrichtung (2) eine zweite Kommunikationseinrichtung (13) enthält, wodurch der Akkumulator (3) und die Ladevorrichtung (2) wenigstens miteinander kommunizieren können,
**gekennzeichnet durch** die folgenden Verfahrensschritte
- Verbinden des wenigstens einen Akkumulators (3) mit der Ladevorrichtung (2);
- Aussenden wenigstens eines Signals von der erste Kommunikationseinrichtung (18) des Akkumulators (3) an die zweite Kommunikationseinrichtung (13) der Ladevorrichtung (2) zur Übermittlung wenigstens eines Akku-Kennwertes;
- Aussenden wenigstens eines Signals von der zweite Kommunikationseinrichtung (13) der Ladevorrichtung (2) an die erste Kommunikationseinrichtung (18) des Akkumulators (3) zum Anzeigen der Ladefähigkeit / Kompatibilität für einen Ladevorgang;
- Aussenden wenigstens eines Signals von der erste Kommunikationseinrichtung (18) des Akkumulators (3) an die zweite Kommunikationseinrichtung (13) der Ladevorrichtung (2) zum Einstellen der Ladevorrichtung (2) in einen Ladezustand;
- Einstellen des Akkumulators (3) von einem Entladezustand in einen Ladezustand;
- Aussenden wenigstens eines Signals von der erste Kommunikationseinrichtung (18) des Akkumulators (3) an die zweite Kommunikationseinrichtung (13) der Ladevorrichtung (2) zum Einstellen wenigstens eines ersten Ladekennwertes an der Ladevorrichtung (2);
- Aussenden elektrischer Energie von der Ladevorrichtung (2) an den Akkumulator (3) entsprechend wenigstens eines von dem Akkumulator (3) angeforderten Ladekennwertes; und
- Aussenden wenigstens eines Signals von der erste Kommunikationseinrichtung (18) des Akkumulators (3) an die zweite Kommunikationseinrichtung (13) der Ladevorrichtung (2) zum Einstellen wenigstens eines zweiten Ladekennwertes an der Ladevorrichtung (2), wenn eine vorbestimmte Zeitdauer und/oder ein vorbestimmter Zustand für den Akkumulator (3) erreicht ist.

2. Verfahren nach Anspruch 1,
**dadurch gekennzeichnet, dass** es sich bei dem wenigstens einen Ladekennwert um einen Spannungswert oder Stromstärkewert handelt.

3. Verfahren nach Anspruch 2,
**dadurch gekennzeichnet, dass** der Spannungswert 21 bis 60 V, insbesondere 48 V beträgt.

4. Verfahren nach Anspruch 2,
**dadurch gekennzeichnet, dass** der Stromstärkewert 1 bis 10 A, insbesondere 5 A beträgt.

5. Verfahren nach wenigstens einem der Ansprüche 1 bis 4,
**dadurch gekennzeichnet, dass** die Ladeleistung der Ladevorrichtung (2) 21 bis 600 W, insbesondere 240 W beträgt.

6. Ladevorrichtung (2) zur Durchführung des Verfahrens nach wenigstens einem der Ansprüche 1 bis 5,
**gekennzeichnet durch** eine Kommunikationseinrichtung (13) und eine Lader-Schnittstelleneinrichtung (7) zum wahlweisen Verbinden der Ladevorrichtung (2) mit wenigstens einem Akkumulator (3), wobei die Lader-Schnittstelleneinrichtung (7) einen USB-Steckers (9) enthält.

7. Akkumulator (3) zur Durchführung des Verfahrens nach wenigstens einem der Ansprüche 1 bis 5,
**gekennzeichnet durch** eine Kommunikationseinrichtung (18) und eine Akku-Schnittstelleneinrichtung (17) zum wahlweisen Verbinden des Akkumulators (3) mit der Ladevorrichtung (2), wobei die Akku-Schnittstelleneinrichtung (17) in Form einer USB-Buchse (10) ausgestaltet ist.

8. System (1) enthaltend eine Ladevorrichtung (2) und wenigstens einen mit der Ladevorrichtung (2) verbindbaren Akkumulator (3) zur Durchführung des Verfahrens nach wenigstens einem der Ansprüche 1 bis 5,
**dadurch gekennzeichnet, dass** der Akkumulator (3) eine erste Kommunikationseinrichtung (18) sowie eine Akku-Schnittstelleneinrichtung (17) und die Ladevorrichtung (2) eine zweite Kommunikationseinrichtung (13) sowie eine Lader-Schnittstelleneinrichtung (7) enthält, sodass die Ladevorrichtung (2) und der Akkumulator (3) zum Laden des Akkumulators (3) mit elektrischer Energie verbindbar sind, wobei die Lader-Schnittstelleneinrichtung (7) einen USB-Stecker (9) und die Akku-Schnittstelleneinrichtung (17) einen USB-Buchse (10) enthält.
